# EUROPÄISCHE PATENTANMELDUNG

(11) **EP 2 299 380 A1**
(43) Veröffentlichungstag der Anmeldung: **23.03.2011**
(21) Anmeldenummer: 10185037.8
(22) Anmeldetag: 01.08.2006
(51) Int. Cl.: G06F 21/00

(54) **Wechselspeichermedium für einen Computer, Verwendung eines Wechselspeichermediums und Verfahren zum Starten und Betreiben eines Computers**

(30) Priorität: 09.09.2005 DE 102005043043
(62) Teilanmeldung aus: 06015999.3
(71) Anmelder: Fujitsu Technology Solutions Intellectual Property GmbH, 80807 München (DE)
(72) Erfinder: Depta, Robert, 86179 Augsburg (DE)
(74) Vertreter: Epping - Hermann - Fischer

(57) **Zusammenfassung**

Die Erfindung betrifft ein Wechselspeichermedium (20) für einen Computer (1), das mindestens einen ersten Speicherbereiche (21) und einen zweiten Speicherbereich (24) und eine Speicherkontrolleinheit (25) aufweist. Dabei enthält der erste Speicherbereich (21) ein Betriebssystem (23) für das Computersystem (1). Die Speicherkontrolleinheit (25) ist so eingerichtet, dass der Computer (1) auf den ersten Speicherbereich (21) in einem ersten Betriebsmodus nur lesend und in einem zweiten Betriebsmodus lesend und schreibend zugreifen kann und auf den zweiten Speicherbereich (24) in beiden Betriebsmodi lesend und schreibend zugreifen kann.

Die Erfindung betrifft außerdem eine Verwendung des Wechselspeichermediums (20) in einem Computer (1) und ein Verfahren zum Starten und Betreiben eines Computers (1).

## Beschreibung

Wechselspeichermedium für einen Computer, Verwendung eines Wechselspeichermediums und Verfahren zum Starten und Betreiben eines Computers

Die Erfindung betrifft ein Wechselspeichermedium zur Verwendung mit einen Computer mit mindestens einer Anschlussmöglichkeit für das Wechselspeichermedium, wobei der Computer dazu eingerichtet ist, ein auf einem angeschlossenen Wechselspeichermedium befindliches Betriebssystem auszuführen. Die Erfindung betrifft weiterhin ein Verfahren zum Starten und Betreiben eines Computers.

Nach dem Einschalten eines Computers wird üblicherweise ein mehrstufiger Startvorgang, auch Booten genannt, durchlaufen, bevor auf dem Computer Anwendungsprogramme ausgeführt werden können. Beispielhaft ist im Folgenden der Startvorgang eines IBM-PC-kompatiblen Computers dargestellt. Nach dem Einschalten des Computers startet hier zunächst ein auf einem nichtflüchtigen Speicher (EPROM - Erasable Programmable Read Only Memory oder Solid-State Speicher) auf der Hauptplatine des Computers enthaltenes Programm, das BIOS (Basic Input Output System) genannt wird. Vom BIOS werden zunächst Bildschirm und Tastatur initialisiert und die Speichermodule des flüchtigen Speichers des Computers getestet. Danach werden Einstellungen zu wichtigen Peripheriegeräten aus einem weiteren nichtflüchtigen Speicher (meist ein durch eine Batterie gepufferter CMOS-Baustein) gelesen. Für den weiteren Bootvorgang sind vor allem die gespeicherten Informationen über angeschlossene Festplattenlaufwerke und weitere Massenspeicher, wie optische Laufwerke, bedeutsam. Von einem dieser Laufwerke wird dann ein erster Datensektor, Master Boot Record (MBR) genannt, eingelesen, der Informationen zum Verlauf des weiteren Startvorgangs beinhaltet. In MBR sind die eigenständigen Teilabschnitte (Partitionen) der Festplattenlaufwerke definiert. Weiterhin ist im MBR ein Programm enthalten, First Stage Boot Load genannt, dessen Aufgabe es ist, auf den angegebenen Partitionen der Festplattenlaufwerke nach so genannten Bootsektoren zu suchen. Ein aufgefundener Bootsektor beinhaltet ein weiteres Programm, Second Stage Boot Load genannt, das im einfachsten Fall ein auf dieser Partition enthaltenes Betriebssystem direkt startet. In anderen Fällen wird dem Benutzer durch den Second Stage Boot Loader beispielsweise die Möglichkeit gegeben, zwischen verschiedenen, auf unterschiedlichen Partitionen enthaltenen Betriebssystemen auszuwählen. Weiterhin kann der Second Stage Boot Loader dazu ausgelegt sein, ein Betriebssystem zu starten, das nicht auf einem der Festplattenlaufwerke oder einem weiteren Massenspeicherlaufwerk enthalten ist, sondern zum Beispiel über eine Netzwerkverbindung eingeladen wird oder auf einem ansteckbaren Wechselspeichermedium, beispielsweise einem USB (Universal Serial Bus) -Speicher oder einer Solid-State Speicherkarte enthalten ist, zu starten.

Das geschilderte bekannte Bootverfahren ermöglicht an mehreren Stellen, in dem Bootvorgang einzugreifen:
- BIOS-Einstellung zur Festlegung des Master Boot Record,
- Inhalte des Master Boot Records (First Stage Boot Loader),
- Inhalte der Bootsektoren der Startpartition (Second Stage Boot Loader).

Diese Eingriffsmöglichkeiten des Benutzers ermöglichen einerseits eine Anpassung des Bootvorgangs an eigene Bedürfnisse, schaffen aber andererseits Sicherheitsprobleme durch mögliche Manipulationen von Einstellungen oder der Boot Loader Programme. Beispielsweise kann durch entsprechende BIOS-Einstellungen ein fremdes Betriebssystem von einer CD oder einem anderen optischen Speichermedium geladen werden und aus diesem Betriebssystem heraus Daten, die von dem eigentlich für den Computer vorgesehenen Betriebssystem durch Passwortschutz vor Zugriff geschützt sind, unberechtigt gelesen werden. Das BIOS bietet zwar meist genau aus diesem Grund die Möglichkeit, ein Booten nur von bestimmten Massenspeichern zuzulassen und diese Einstellungen durch ein Passwort zu schützen, das in dem CMOS-Speicher des BIOS hinterlegt ist. Die Schutzeigenschaften eines solchen oder ähnlichen Verfahrens sind meistens mit sehr einfachen Methoden umzugehen. Beispielsweise ist eine einfache Manipulation durch Unterbrechen der Stromversorgung des CMOS-Speichers auf der Hauptplatine des Computers durch das kurzfristige Entfernen der versorgenden Batterie des CMOS-Speichers bereits ausreichend, um den Passwortschutz des BIOS auszuhebeln.

Bei den bekannten Bootverfahren ist es darüber hinaus üblich, ein Betriebssystem von einem vom Hersteller gelieferten Installationsmedium (CD, DVD) in einer lokalen, an die Konfiguration des Computers angepassten Version auf einem Festplattenlaufwerk des Computers zu installieren. Auch diese Vorgehensweise lässt viele Manipulationsmöglichkeiten zu, diesmal nicht während des Starten des Betriebssystems, aber während seiner Betriebsphase. Beispielsweise liegen viele wichtige, vom Betriebssystem benutzte Dateien, die so genannten Systemdateien, häufig vor Zugriff ungeschützt auf dem Festplattenlaufwerk vor. Anwendungsprogramme, die installiert werden, können diese Dateien mit eigenen, an ihre Belange angepassten Versionen dieser Systemdateien überschreiben, wodurch unter Umständen die korrekte Funktion des Systems oder weitere Anwendungen nicht mehr garantiert sind.

Ein weiterer Nachteil bekannter Bootverfahren, bei denen ein Betriebssystem durch Installation auf ein nicht auswechselbaren Massenspeichermedium auf dem Computer übertragen wird, ist, dass vom Benutzer bevorzugte Einstellungen und Konfigurationen des Betriebssystems für jeden Computer, an dem der Benutzer arbeiten möchte, einzeln eingestellt werden müssen.

Eine Ausnahme bilden hier Installationen innerhalb eines definierten Netzwerks, bei denen die Einstellungen zentral auf einem Server gehalten werden können und bei jedem Computerstart von diesem zentralen Server auf den lokalen Computer geladen werden. Falls eine solche Situation nicht vorliegt (z.B. bei Computern oder mobilen Computer, die nicht ins Netzwerk eingebunden sind), wird ein Anwender auf jedem benutzten Computer zunächst mit einer ungewohnten Arbeitsumgebung konfrontiert. Unter Umständen, zum Beispiel bei Benutzern mit Sehschwächen, kann eine nicht korrekt eingestellte Arbeitsumgebung die Benutzung des jeweiligen Computers nicht nur erschweren, sondern unmöglich machen.

Es ist daher eine Aufgabe der vorliegenden Erfindung, ein Speichermedium für ein Betriebssystems eines Computers anzugeben, das ein Ladens sowie der Betrieb eines Betriebssystems bei einem Startvorgang des Computers schützt und bei dem die Integrität des Betriebssystems gesichert ist. Es ist eine weitere Aufgabe der vorliegenden Erfindung, eine Verwendung des Wechselspeichermedium in Verbindung mit dem Computer und einem Verfahren zum Starten des Computers anzugeben.

Diese Aufgaben werden gelöst durch ein Wechselspeichermedium nach Anspruch 1, dessen Verwendung nach Anspruch 9 sowie ein Verfahren gemäß Anspruch 11.

Das erfindungsgemäße Wechselspeichermedium ist zum Einsatz mit einem Computer geeignet und weist mindestens zwei Speicherbereiche und eine Speicherkontrolleinheit auf, wobei die Speicherkontrolleinheit so eingerichtet ist, dass der Computer auf einen der beiden Speicherbereiche in einem ersten Betriebsmodus nur lesend und in einem zweiten Betriebsmodus lesend und schreibend zugreifen kann und auf den anderen Speicherbereich in beiden Betriebsmodi lesend und schreibend zugreifen kann.

Durch das Bereitstellen von zwei verschiedenen Speicherbereichen und verschiedenen Betriebsmodi wird ein differenzierter Zugangsschutz für die auf dem Wechselspeichermedium enthaltenen Inhalte realisiert. Dadurch kann erreicht werden, dass beim (Normal-)Betrieb in dem ersten Betriebsmodus ein auf dem Wechselspeichermedium enthaltenes Betriebssystem vor Veränderungen geschützt ist, weitere Daten jedoch auf dem Wechselspeichermedium abgelegt werden können. Dennoch besteht im zweiten Betriebsmodus die Möglichkeit, in besonderen Situationen, z.B. für ein Update, das Betriebssystem zu verändern.

In einer vorteilhaften Ausführungsform des Wechselspeichermedium ist die Speicherkontrolleinheit so eingerichtet ist, dass sie den Betrieb des Wechselspeichermediums in dem ersten und/oder dem zweiten Betriebsmodus nur zulässt, wenn zuvor vom Computer übermittelte Zugangsschutzdaten empfangen, überprüft und für korrekt befunden wurden.

Das erfindungsgemäße Verfahren zum Starten und Betreiben eines Computers mit einem auf einem Wechselspeichermedium enthaltenen Betriebssystems, weist die folgenden Schritte auf:
- Überprüfen der Authentizität des Wechselspeichermediums und/oder
- Überprüfen der Nutzungsbefugnis eines Benutzers für das Ausführen des auf dem Wechselspeichermedium enthaltenen Betriebssystems,
- Ausführen des auf dem Wechselspeichermedium enthaltenen Betriebssystems, falls das Wechselspeichermedium authentisch ist und/oder der Benutzer zur Nutzung des Betriebssystems befugt ist.

Durch das Überprüfen der Authentizität des Wechselspeichermediums ist die Integrität des Betriebssystems sichergestellt. Modifikationen am Betriebssystem, die zu instabilen Betriebszuständen führen können, werden ausgeschlossen. Durch die Überprüfung der Nutzungsbefugnis des Benutzers können sowohl Lizenzen überprüft werden, als auch eine Fremdbenutzung ausgeschlossen werden. In einer vorteilhaften Ausführungsform der Erfindung wird die Authentizität des angeschlossenen Wechselspeichermediums anhand eines Zertifikats überprüft. In einer weiteren vorteilhaften Ausführungsform wird die Nutzungsbefugnis des Benutzers anhand eines Passworts überprüft.

Das offenbarte Wechselspeichermedium eignet sich zur Verwendung in einem Computer mit mindestens einer Anschlussmöglichkeit für das Wechselspeichermedium. Das Computersystem ist dazu eingerichtet, ein auf einem angeschlossenen Wechselspeichermedium befindliches Betriebssystem auszuführen und weist eine Bootkontrollvorrichtung auf. Die Bootkontrollvorrichtung ist geeignet, das oben geschilderte Verfahren auszuführen.

In einer vorteilhaften Ausführungsformen ist die Bootkontrollvorrichtung entweder als eigenständige Hardwareeinheit innerhalb des Computers ausgeführt, oder mithilfe eines Programms realisiert, wobei das Programm in einem nichtveränderbaren Speicher abgelegt ist. Durch eine derartige Bootkontrollvorrichtung werden Manipulationsmöglichkeiten zur Umgehung des Authentifizierungs- und/oder Autorisierungsschrittes beim Startvorgangs des Computers und damit auch am benutzten Betriebssystem weiter eingeschränkt.

In einer anderen vorteilhaften Ausführungsform ist die Anschlussmöglichkeit innerhalb des Computers mit der Bootkontrollvorrichtung verbunden, so dass alle zwischen dem angeschlossenen Wechselspeichermedium und dem Computer ausgetauschten Daten über die Bootkontrollvorrichtung geführt werden. Dadurch wird ebenfalls erschwert, die Authentifizierungs- und/oder Autorisierungsschritt beim Startvorgangs des Computers zu umgehen.

In einer weiteren vorteilhaften Ausführungsform ist der Computer so eingerichtet, dass ein Ausführen eines Betriebssystems nur von einem der angeschlossenen Wechselspeichermedien möglich ist. Auch damit werden Manipulationen am Computer bzw. an den auf einem Massenspeichermedium des Computers enthaltenen Daten erschwert.

Weitere vorteilhafte Ausgestaltungen und Weiterbildungen der Erfindung sind Gegenstand der jeweiligen abhängigen Ansprüche.

Im Folgenden wird die Erfindung anhand eines Ausführungsbeispiels mit Hilfe von zwei Figuren näher erläutert.

Es zeigt:
Figur 1 eine schematische Darstellung eines Ausführungsbeispiels des erfindungsgemäßen Computers und
Figur 2 eine schematische Darstellung eines Ausführungsbeispiels des erfindungsgemäßen Wechselspeichermediums, das in Verbindung mit dem in Figur 1 gezeigten Computer zur Durchführung des erfindungsgemäßen Verfahrens geeignet ist.

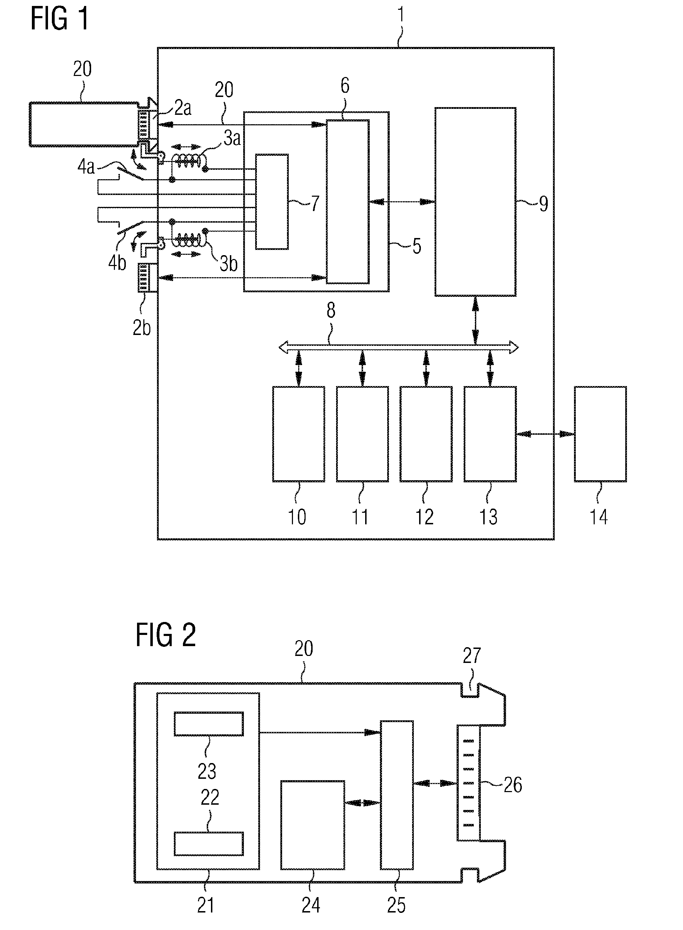

Figur 1 zeigt schematisch in Form eines Blockschaltbilds einen Computer 1 mit Anschlussmöglichkeiten 2a, 2b für Wechselspeichermedien, wobei in die Anschlussmöglichkeit 2a ein Wechselspeichermedium 20 eingesteckt ist. Zu jeder der beiden Anschlussmöglichkeiten 2a, 2b ist eine Arretiervorrichtung 3a, 3b sowie ein Auswahlschalter 4a, 4b vorgesehen. Die Anschlussmöglichkeiten 2, Arretiervorrichtungen 3 und Auswahlschalter 4 sind mit einer Bootkontrollvorrichtung 5 verbunden. Die Bootkontrollvorrichtung 5 weist eine Ver- und Entschlüsselungseinheit 6 sowie eine Arretiersteuerung 7 auf. Die Bootkontrollvorrichtung 5 ist über ein Bussystem 8 mit weiteren Komponenten des Computers verbunden. Diese sind ein BIOS (basic input output system) 9, ein Prozessor 10, ein Hauptspeicher 11, ein Massenspeichermedium 12 sowie Schnittstellen 13, an die Peripheriegeräte 14 außerhalb des Computers 1 anschließbar sind.

Der in Figur 1 gezeigte schematische Aufbau eines Ausführungsbeispiels des erfindungsgemäßen Computers 1 ist aus Gründen der Übersicht auf solche Komponenten beschränkt, die im Rahmen der Erfindung wesentlich sind. Für seine Funktion wichtige, aber aus dem Stand der Technik bekannte und im Rahmen der Erfindung nicht relevante Komponenten wie Stromversorgung, optische Laufwerke usw. sind nicht dargestellt. Auch versteht sich, dass der in der schematischen Darstellung gezeigte Computers 1 eine sehr vereinfacht Architektur aufweist. Beispielsweise ist lediglich ein Bussystem 8 gezeigt, das die verschiedenen Komponenten des Computers 1 verbindet. Die erfindungswesentlichen Merkmale des gezeigten Computers 1 lassen sich jedoch auch auf komplexere bekannte und übliche Computerarchitekturen übertragen. Dieses gilt in analoger Weise für die nicht näher ausdifferenzierten Schnittstellen 13 zur Anbindung von externen Peripheriegeräten 14. Hierunter sind bekannte und übliche Schnittstellen und Peripheriegeräte zu verstehen, wie beispielsweise eine PS/2 Schnittstelle für Tastaturen und Mauszeigegeräte, eine Videoschnittstelle zum Anschluss eines oder mehrerer Monitore, USB oder andere serielle oder parallele Datenübertragungsschnittstellen zum Anschluss externer Massenspeichereinrichtungen oder Drucker sowie bekannte Netzwerkverbindungen.

Zusätzlich zu den bekannten Schnittstellen 13 weist der Computer 1 erfindungsgemäß die Anschlussmöglichkeiten 2a und 2b für Wechselspeichermedien 20 auf. Dass gerade zwei Anschlussmöglichkeiten 2 gezeigt sind, ist rein beispielhaft. Es ist hier jede beliebige Zahl denkbar, wobei die Verbindung zur Bootkontrollvorrichtung wie gezeigt als Punkt-zu-Punkt Verbindung aber auch über einen Bus ausgeführt sein kann. Bezüglich ihrer elektrischen Anschlusseigenschaften und ihrer Datenübertragungseigenschaften können die Anschlussmöglichkeiten 2 durchaus bekannten Spezifikationen und Protokollen folgen, zum Beispiel gemäß der USB - hier aus Geschwindigkeitsgründen insbesondere USB 2.0 - Spezifikation oder gemäß der SAS (serial attached small computersystem interface) oder SATA (serial advanced technology attachment) Spezifikation. Neben den genannten ist prinzipiell jede Hochgeschwindigkeitsdatenübertragungsschnittstelle geeignet.

Von den Schnittstellen 13 unterscheiden sich die Anschlussmöglichkeiten 2 insbesondere dadurch, dass ein Datenaustausch mit den angeschlossenen Wechselspeichermedien 20 nur über die Bootkontrollvorrichtung 5 möglich ist. Um Manipulationen an der Bootkontrollvorrichtung 5 zu erschweren, ist diese als eigenständige Einheit ausgeführt. Bevorzugt ist die Bootkontrollvorrichtung 5 eine separate Hardwareeinheit, wobei sie sich durchaus mit auf der Hauptplatine des Computers 1 befinden kann, aber in dem Sinne separat ist, dass z.B. innerhalb der Bootkontrollvorrichtung 5 benutzte Speicher anderen Komponenten des Computers 1 nicht zugänglich sind. Es ist aber auch denkbar, die Bootkontrollvorrichtung 5 softwareimplementiert auszuführen, wobei sie dann in einem Speicherbereich, der nicht überschreibbar ist, enthalten ist. Die Bootkontrollvorrichtung 5 kann sogar Teil des BIOS 9 sein, falls durch geeignete Maßnahmen sichergestellt ist, dass der Teil des BIOS 9, in dem sich die Bootkontrollvorrichtung 5 befindet, bei Updates ("BIOS-Flash") durch den Benutzer nicht überschrieben werden kann. Die Softwareimplementierung der Bootkontrollvorrichtung 5 stellt vor allem im Konsumerbereich mit geringeren Sicherheitsansprüchen eine Alternative zur Hardwareimplementierung dar.

Die Funktionsweisen der Bootkontrollvorrichtung 5 und der von ihr umfassten Ver- und Entschlüsselungseinheit 6 und Arretiersteuerung 7 werden weiter unten detaillierter beschrieben.

Weiterhin unterscheiden sich die Anschlussmöglichkeiten 2 von bekannten Schnittstellen durch das Vorhandensein der Arretiervorrichtungen 3 und der Auswahlschalter 4. Die Arretiervorrichtungen 3a und 3b erlauben, ein an die jeweilige Anschlussmöglichkeit 2a beziehungsweise 2b angeschlossenes Wechselspeichermedium 20 mechanisch an der Anschlussmöglichkeit 2 und somit am Computer 1 zu fixieren und damit das Entfernen des Wechselspeichermediums 20 zu verhindern. Ein Arretieren beziehungsweise Freigeben des Wechselspeichermediums 20 kann dabei durch die Arretiersteuerung 7 der Bootkontrollvorrichtung 5 gesteuert werden. Mechanisch lässt sich dieses beispielsweise erreichen, in dem ein elektromagnetisch betätigter Haken in eine entsprechende Gehäuseaussparung des Wechselspeichermediums 20 eingreift, wie dieses in der Schemazeichnung angedeutet ist. Neben einer elektromagnetischen oder elektromechanischen Betätigung ist für die Arretiervorrichtung 3 ebenso eine piezoelektrische Betätigung denkbar.

Die Arretiervorrichtung 3 sollte dabei so ausgelegt sein, dass ein Arretieren des Wechselspeichermediums 20 passiv, zum Beispiel über Federkräfte erfolgt, während ein Freigeben des Wechselspeichermediums 20 aktiv durch entsprechende Signale der Bootkontrollvorrichtung geschehen muss. Dieses hat den Vorteil, dass die Arretierung des Wechselspeichermediums 20 nicht durch Unterbrechung der Stromversorgung des Computers 1 gelöst werden kann. In einer alternativen Ausführungsform kann vorgesehen sein, dass zum Einsetzen von Wechselspeichermedien 20 diese in einer Vertiefung des Gehäuses des Computer 1 versenkt werden, sodass ein Entnehmen aus rein mechanischen Gründen nicht möglich ist. Aufgabe der Arretiervorrichtung ist dann nicht das Festhalten der Wechselspeichermedien 20 sondern umgekehrt deren aktives Auswerfen, was allerdings zur gleichen Funktionalität der Arretiervorrichtung 3 führt.

In einer weiteren Ausführungsform können die Arretiervorrichtungen 3 auch so ausgelegt sein, dass sie neben der Arretierung eines bereits eingesetzten Wechselspeichermediums 20 auch ermöglichen, ein Ankoppeln eines Wechselspeichermediums 20 an eine der Anschlussmöglichkeiten 2 zu verhindern.

In Figur 2 ist ein Ausführungsbeispiel des Wechselspeichermediums 20, das zum Anschluss an die Anschlussmöglichkeiten 2a, 2b des Computers 1 geeignet ist, näher dargestellt.

Das Wechselspeichermedium 20 weist einen Speicherbereich 21 auf, der ein Betriebssystem 22 und ein Zertifikat 23 umfasst. Dieser Speicherbereich 21 ist so eingerichtet, dass auf ihn in einem ersten Betriebsmodus nur lesend zugegriffen werden kann und in einem zweiten Betriebsmodus lesend und schreibend zugegriffen werden kann. Es ist ein weiterer Speicherbereich 24 vorgesehen, auf den in beiden Betriebsmodi lesend und schreibend zugegriffen werden kann. Eine Speicherkontrolleinheit 25 ist mit beiden Speicherbereichen 21 und 24, sowie Anschlüssen 26 verbunden. In das Gehäuse des Wechselspeichermediums 20 sind Arretierkerben 27 eingearbeitet, mit denen die Arretiervorrichtung 3 zusammenwirken kann.

Der erste Betriebsmodus stellt den Normalbetriebsmodus dar, in dem der Computer 1 von einem auf dem Wechselspeichermedium 20 vorgesehen Betriebssystem 23 gestartet und betrieben wird. Der zweite Betriebsmodus ist für Ausnahmefälle wie ein Rückschreiben einer Sicherheitskopie des Betriebssystem 23 oder ein Update des Betriebssystem 23. Da im ersten Betriebsmodus, in dem das Wechselspeichermedium 20 normalerweise betrieben wird, auf den Speicherbereich 21 nur lesend zugegriffen werden kann, wird er zur Vereinfachung als Lesespeicher 21 bezeichnet und demgegenüber der Speicherbereich 24 als Schreiblesespeicher 24.

Im Folgenden wird der Startvorgang des Computers 1 einschließlich des Ladens des Betriebssystems 23 von dem Wechselspeichermedium 20 nach dem erfindungsgemäßen Verfahren beschrieben.

Nach dem Starten des Computers 1 beziehungsweise nach einem Neustart des Computers 1 nach Benutzer- und/oder Betriebssystemwechsel überprüft die Bootkontrollvorrichtung 5 zunächst, ob Wechselspeichermedien 20 an einer der beiden oder an beiden Anschlussmöglichkeiten 2a, 2b angeschlossen sind und welches der Wechselspeichermedien 20 durch den entsprechenden Schalter 4a beziehungsweise 4b vom Benutzer für den Startvorgang ausgewählt wurde.

Die Auswahlschalter 4a, 4b ermöglichen somit, dass ein Benutzer verschiedene Wechselspeichermedien 20, beispielsweise mit unterschiedlichen Betriebssystemen 23, permanent an den Computer 1 eingesteckt lassen kann/darf und bei jedem Bootvorgang selektiv das gewünschte Betriebssystem 23 auswählen kann. In einer einfachen Ausführung des Computer 1 könnte auf diese Möglichkeit verzichtet werden und nur eine Anschlussmöglichkeit 2a bereitgestellt werden, wodurch der Auswahlschalter 4 entfallen könnte. Beispielhaft wird im Folgenden von einer Konfiguration wie in Figur 1 gezeigt ausgegangen, bei der lediglich ein Wechselspeichermedium 20 angeschlossen an die Anschlussmöglichkeit 2a vorhanden ist und dieses Wechselspeichermedium 20 durch entsprechende Schalterstellung des Auswahlschalters 4a auch ausgewählt ist.

Eines der grundlegenden Ziele der Erfindung ist, den Computer 1 und auf seinem Massenspeichermedium 12, z.B. einem Festplattenlaufwerk, enthaltene Daten seiner Benutzer vor unberechtigtem Zugriff sowie vor Zerstörung durch ein nicht integres Betriebssystem zu schützen.

Dieses wird im Wesentlichen durch zwei Verfahrensschritte erreicht: erstens der Authentifizierung des Wechselspeichermediums 20, von dem ein Betriebssystem 23 geladen werden soll und zweitens der Überprüfung der Befugnis eines Benutzers, dieses Betriebssystem 23 nutzen zu dürfen. Die Wirksamkeit beider Verfahrensschritte setzt voraus, dass Möglichkeiten sie zu umgehen, unterbunden werden. Daher ist das BIOS 9 des Computers 1 so ausgelegt, dass das Laden eines Betriebssystems nur von einem an die Bootkontrollvorrichtung 5 angeschlossenen Wechselspeichermedium 20 möglich ist. Jede andere Möglichkeit, ein Betriebssystem zu laden, muss strikt unterbunden sein. Dieses gilt sowohl für interne Massenspeichermedien 12, zum Beispiel ein Festplattenlaufwerk oder ein eventuell vorhandenes optisches Laufwerk, als auch für externe, beispielsweise über die Schnittstellen 13 angeschlossene Massenspeicher.

Nachdem ein Wechselspeichermedium 20 vom Benutzer für den Startvorgang ausgewählt wurde, wird zunächst die Authentizität des Wechselspeichermediums 20 und damit des enthaltenen Betriebssystems 23 vom BIOS 9 gesteuert durch die Bootkontrollvorrichtung 5 getestet. Eine Möglichkeit eine solche Authentizitätsprüfung vorzunehmen, bieten beispielsweise Zertifikate, auch digitale Signaturen genannt. Dabei handelt es sich um eine bekannte Codephrase, zum Beispiel der Name des Herstellers eines Betriebssystems, die vom Hersteller mit einem asymmetrischen Verschlüsselungsverfahren unter Verwendung eines so genannten privaten Schlüssels verschlüsselt und auf dem Wechselspeichermedium 20 hinterlegt wird.

Wie in Figur 2 ersichtlich, ist ein solches Zertifikat 22 zusammen mit dem Betriebssystem 23 im Lesespeicher 21 des Wechselspeichermediums 20 enthalten. Zur Authentifizierung wird dieses Zertifikat 22 von der Bootkontrollvorrichtung 5 eingelesen und in der Ver- und Entschlüsselungseinheit 6 der Bootkontrollvorrichtung 5 mit dem bekannten, zum privaten Schlüssel des Herstellers komplementären öffentlichen Schlüssel entschlüsselt. Dieser öffentliche Schlüssel muss vom Hersteller eines Betriebssystems bereitgestellt werden. Er kann entweder im BIOS 9 hinterlegt sein oder bei jedem Startvorgang über eine Netzwerkverbindung aktuell vom Hersteller oder einem öffentlichen Schlüsselserver geladen werden. Wird im entschlüsselten Zertifikat 22 die vereinbarte Codephrase nach dem Entschlüsseln aufgefunden, weist dieses auf ein authentisch vom vorgegebenen Hersteller erstelltes Wechselspeichermedium 20 hin.

Von dem hier in einer einfachen Form beschriebenen System des Zertifizierens beziehungsweise der digitalen Signaturen sind komplexere Verfahren bekannt, die gleichzeitig das Überprüfen von Lizenzen oder Seriennummern, sowie die Aufnahme einer Gültigkeitsdauer für die Benutzung des Wechselspeichermediums 20 ermöglichen. Solche bekannten Verfahren können uneingeschränkt im Rahmen dieser Erfindung eingesetzt werden.

Nach dem sich das Wechselspeichermedium 20 gegenüber der Bootkontrollvorrichtung 5 und damit dem BIOS 9 authentifiziert hat, wird als zweiter Schritt die Befugnis des Benutzers überprüft, dieses Wechselspeichermedium 20 und das darauf enthaltene Betriebssystem 23 benutzen zu dürfen. Auch hier können verschiedenste, aus dem Stand der Technik bekannte Autorisierungsmöglichkeiten eingesetzt werden, angefangen von einer einfachen Passworteingabe, die die Bootkontrollvorrichtung, eventuell mithilfe des BIOS 9, über Bildschirm und Tastatur vom Benutzer verlangt, bis hin zur Überprüfung biometrischer Daten des Benutzers, die über besondere Peripheriegeräte 14, wie beispielsweise einen Fingerabdrucksensor, möglich ist. Diese Überprüfung der Zugangsdaten wird innerhalb der Bootkontrollvorrichtung durchgeführt.

Nur wenn beide Überprüfungsschritte, Authentizitätsprüfung und Autorisierungsprüfung, positiv verlaufen, wird das Betriebssystem 23 auf dem Computer 1 ausgeführt. Um sicher zu stellen, dass das Betriebssystem 23 auch im Betrieb integer bleibt, sind alle Daten des Betriebssystems 23 auf dem Wechselspeichermedium 20 verschlüsselt abgelegt. Die Entschlüsselung benötigter Dateien des Betriebssystems 23 übernimmt die Ver- und Entschlüsselungseinheit 6 der Bootkontrollvorrichtung 5. Zur Verschlüsselung des Betriebssystems 23 können beliebige bekannte symmetrische oder asymmetrische Verschlüsselungsverfahren eingesetzt werden, wobei aus Performancegründen den symmetrischen Schlüsselverfahren hier der Vorzug zu geben ist. Der zur Entschlüsselung benutzte Schlüssel könnte vom Benutzer abgefragt werden. Um den Benutzer allerdings nicht mit zu vielen Abfragen beim Startvorgang des Computers 1 zu belästigen, könnte der Schlüssel auch an das Autorisierungspasswort des Benutzers gekoppelt sein oder anhand der Authentifizierungsdaten des Wechselspeichermediums 20 über eine Netzwerkverbindung aus einer Datenbank des Herstellers erfragt werden.

Zusätzlich ist das Betriebssystem 23 dadurch vor Manipulationen geschützt, dass es im Lesespeicher 21 des Wechselspeichermediums 20 enthalten ist. Bei diesem Lesespeicher 21 handelt es sich nicht einen ROM (read only memory) im eigentlichen Sinne. Das Schreibverbot wird, abhängig vom Betriebsmodus, durch die Speicherkontrolleinheit 25 sichergestellt, obwohl beide Speicherbereiche 21 und 24 von ihren physikalischen Eigenschaften her wiederbeschreibbare Speicher sind.

Eine solche Konfiguration hat den Vorteil, dass unter bestimmten Umständen, zum Beispiel zum Einspielen von Updates des Betriebssystems 23 oder zum Rückspeichern von Sicherheitskopien des Betriebssystems 23, ein Einspeisen von Daten in den Speicherbereich 21, der im ersten Betriebsmodus als Nur-Lesespeicher ausgelegt ist, in einem zweiten Betriebsmodus ermöglichen.

Zu diesem Zweck stellt die Speicherkontrolleinheit 25 für den zweiten Betriebsmodus einen Zugriffsschutz bereit, so dass der Schreibzugriff auf den Speicherbereich 21 nur nach Übermittlung korrekter Zugangsdaten, die dem Benutzer unbekannt sind und versteckt bzw. verschlüsselt in der Sicherheitskopien oder einem Update des Betriebssystems 23 enthalten sind.

Darüber hinaus kann die Speicherkontrolleinheit 25 auch für den "normalen", ersten Betriebsmodus einen Zugriffsschutz aufweisen, der auch einen lesenden Zugriff auf den Speicherbereich 21 sowie den lesenden und schreibenden Zugriff aud den Speicherbereich 24 nur nach Übermittlung korrekter Zugangsdaten erlaubt. Das vom Benutzer zur Autorisierung verwendete Passwort oder auch Lizenzdaten könnten hier beispielsweise als Zugangsdaten eingesetzt werden. Es wird so ein weiterer Schutz des Betriebssystems 23 und von sonstigen Daten auf dem Wechselspeichermedium 20 vor unberechtigtem Zugriff geboten.

Abweichend von den in den Figuren gezeigten Ausführungsbeispielen kann eine Ver- und Entschlüsselungseinheit auch im Wechselspeichermedium 20 anstatt der Ver- und Entschlüsselungseinheit 6 oder zusätzlich zu dieser in der Bootkontrollvorrichtung 5 vorgesehen sein. Zur Nutzung einer in dem Wechselspeichermedium 20 enthaltenen Ver- und Entschlüsselungseinheit wird dann der jeweils benötigte Schlüssel dem Wechselspeichermedium 20 von der Bootkontrollvorrichtung 5 zur Verfügung gestellt.

In einer Ausführungsform erfolgt das Ausführen des Betriebssystem 23 direkt vom Wechselspeichermedium 20 aus, ohne dass Teile des Betriebssystems 23 zuvor in den Hauptspeicher 11 kopiert werden. Dabei führt allerdings jeder Zugriff auf das Betriebssystem 23 zu einer simultane Entschlüsselung durch die Ver- und Entschlüsselungseinheit 6. Aus Leistungsgründen ist daher ebenfalls denkbar, dass gewisse, insbesondere häufig benötigte Komponenten des Betriebssystems 23 nur einmal entschlüsselt werden und in ihrer entschlüsselten Version im Hauptspeicher 11 vorgehalten werden. An dieser Stelle ist zwischen Leistungs- und Sicherheitsaspekten abzuwiegen, da im Hauptspeicher 11 abgelegte Komponenten des Betriebssystems 23 zumindest temporär bis zum nächsten Neustart des Computers 1 nicht mehr gegen Manipulation geschützt sind.

Betriebssysteme weisen üblicherweise eine Vielzahl von Konfigurationsdateien auf, einerseits zur Anpassung an verschiedene Hardwaregegebenheiten eines Computers, andererseits zur Aufnahme von benutzerangepassten Einstellungen. Erfindungsgemäß ist zur Aufnahme von solchen Anpassungs- und Konfigurationsdateien der Schreiblesespeicher 24 auf dem Wechselspeichermedium 20 vorgesehen. Um insbesondere die benutzerspezifischen Anpassungen, die unter Umständen auch Passwörter zur Benutzung von Programmen oder andere sensible Daten enthalten können zu schützen, werden diese Daten von der Ver- und Entschlüsseleinheit 6 verschlüsselt, bevor sie in dem Schreiblesespeicher 24 abgelegt werden. Um ein Arbeiten mit dem Betriebssystem 23 des Wechselspeichermediums 20 auf verschiedenen Computern 1 zu ermöglichen, werden Anpassungsdateien an die einzelnen Computer 1 vorteilhafterweise zusammen mit einer diesen Computer 1 identifizierenden Nummer, zum Beispiel der Seriennummer des Prozessors 10 oder einer dem BIOS 9 eindeutig zugeordneten Kennnummer, versehen.

Um zu verhindern, dass ein gerade aktives Betriebssystem 23 versehentlich oder unberechtigt vom Computer 1 entfernt wird, wird die zugeordnete Arretiervorrichtung 3 (im Beispiel von Figur 1 also die Arretiervorrichtung 3a) von der Arretiersteuerung 7 der Bootkontrollvorrichtung 5 angewiesen, ein Entfernen des Wechselspeichermediums 20 zu verhindern. Zum Lösen dieser Arretierung ist es notwendig, dass das entsprechende Betriebssystem 23 ordnungsgemäß heruntergefahren wird, was aus Sicherheitsgründen die nochmalige Eingabe des Benutzerpassworts voraussetzt.

In einer alternativen Ausführungsform könnte es abweichend davon jedoch möglich sein, ein Wechselspeichermedium 20 auch vor dem Herunterfahren und Beenden des Betriebssystems 23 zu entfernen. Auch in diesem Fall ist dazu eine Passworteingabe notwendig. Dieser Anwendungsfall, der sich anbietet, wenn das Betriebssystem 23 mit einer Mehrfachlizenz zur mehrfachen parallelen Benutzung ausgestattet ist, setzt jedoch voraus, dass die im Betrieb benötigten Daten und Dateien des Betriebssystem 23 zuvor in den Hauptspeicher 11 kopiert werden.

Weitere Besonderheiten des erfindungsgemäßen Verfahrens können sich ergeben, wenn der Computer 1 zur parallelen Ausführung mehrerer Betriebssysteme 23 eingerichtet ist. Dieses kann einerseits dadurch erreicht werden, dass der Computer 1 mehrere Prozessoren 10 aufweist, oder dadurch, dass durch das Ausführen geeigneter Programme mehrere virtuelle Prozessoren simuliert werden. In einem solchen Fall ist vorgesehen, dass von einem Wechselspeichermedium 20 mehrere Instanzen des Betriebssystems 23 gestartet werden können, oder dass von verschiedenen, an verschiedene Anschlussmöglichkeiten zwei eingesteckten Wechselspeichermedien 20 unterschiedliche Betriebssysteme 23 parallel betrieben werden können.

Die Ausführung des erfindungsgemäßen Verfahrens ist nicht ausschließlich unter Benutzung des erfindungsgemäßen Wechselspeichermediums 20 gemäß Anspruch 23 möglich. Es ist ebenfalls denkbar, ein Wechselspeichermedium, das nur einen Speicherbereich, auf den lesend und schreibend zugegriffen werden kann, einzusetzen ohne den grundlegenden Erfindungsgedanken zu verlassen. Solche Wechselspeichermedium stellen beispielsweise die so genannten "USB-(Memory-)Sticks" dar. Einige der beschriebenen zusätzlichen Sicherheitsmaßnahmen sind allerdings in Verbindung mit einem solchen Wechselspeichermedium nicht realisierbar.

### Bezugszeichenliste:

- 1:: Computer
- 2a, 2b:: Anschlussmöglichkeit für Wechselspeichermedium 20
- 3a, 3b:: Arretiervorrichtung
- 4a, 4b:: Auswahlschalter
- 5:: Bootkontrollvorrichtung
- 6:: Ver-/Entschlüsselungseinheit
- 7:: Arretiersteuerung
- 8:: Bussystem
- 9:: BIOS
- 10:: Prozessor
- 11:: Hauptspeicher
- 12:: Massenspeichermedium
- 13:: Schnittstellen
- 14:: Peripheriegeräte
- 20:: Wechselspeichermedium
- 21:: Speicherbereich (Lesespeicher)
- 22:: Zertifikat
- 23:: Betriebssystem
- 24:: Speicherbereich (Schreiblesespeicher)
- 25:: Speicherkontrolleinheit
- 26:: Anschlüsse
- 27:: Arretierkerbe

## Patentansprüche

1. Wechselspeichermedium (20) für einen Computer (1), das mindestens einen ersten Speicherbereiche (21) und einen zweiten Speicherbereich (24) und eine Speicherkontrolleinheit (25) aufweist, wobei der erste Speicherbereich (21) ein Betriebssystem (23) für den Computer (1) enthält und die Speicherkontrolleinheit (25) so eingerichtet ist, dass der Computer (1) auf den ersten Speicherbereich (21) in einem ersten Betriebsmodus nur lesend und in einem zweiten Betriebsmodus lesend und schreibend zugreifen kann und auf den zweiten Speicherbereich (24) in beiden Betriebsmodi lesend und schreibend zugreifen kann, wobei der erste Betriebsmodus einen Normalbetriebsmodus darstellt, in dem der Computer (1) von dem auf dem Wechselspeichermedium (20) enthaltenen Betriebssystem (23) gestartet und betrieben werden kann.

2. Wechselspeichermedium (20) nach Anspruch 1, bei dem die Speicherkontrolleinheit (25) so eingerichtet ist, dass sie den Betrieb des Wechselspeichermediums (20) in dem ersten und/oder dem zweiten Betriebsmodus nur zulässt, wenn zuvor vom Computer (1) übermittelte Zugangsschutzdaten empfangen, überprüft und für korrekt befunden wurden.

3. Wechselspeichermedium (20) nach Anspruch 2, bei dem die Zugangsschutzdaten für die beiden Betriebsmodi unterschiedlich sind.

4. Wechselspeichermedium (20) nach einem der Ansprüche 1 bis 3, bei dem eine Ver- und Entschlüsselungseinheit vorgesehen ist, die alle in das Wechselspeichermedium (20) einzuspeichernden und aus dem Wechselspeichermedium (20) auszulesenden Daten ver- bzw. entschlüsselt.

5. Wechselspeichermedium (20) nach einem der Ansprüche 1 bis 4, umfassend Anschlüsse (26) einer Hochgeschwindigkeitsdatenübertragungsschnittstelle zum Anschluss des Wechselspeichermediums (20) an eine Anschlussmöglichkeit (2) des Computers (1).

6. Wechselspeichermedium nach Anspruch 5, **dadurch gekennzeichnet, dass** die Hochgeschwindigkeitsdatenübertragungsschnittstelle der USB-Spezifikation, insbesondere der USB-2.0-Spezifikation, der SAS-Spezifikation oder der SATA-Spezifikation entspricht.

7. Wechselspeichermedium nach einem der Ansprüche 1 bis 6, **dadurch gekennzeichnet, dass** in ein Gehäuse des Wechselspeichermediums (20) Arretierkerben (27) eingearbeitet sind, die dazu eingerichtet sind, mit einer Arretiervorrichtung (3) des Computers (1) zusammenzuwirken.

8. Wechselspeichermedium (20) nach einem der Ansprüche 1 bis 7, bei dem der erste Speicherbereich (21), auf den der Computer (1) im ersten, normalen Betriebsmodus nur lesend zugreifen kann, ein Zertifikat (22) über die Authentizität des Wechselspeichermediums (20) enthält.

9. Verwendung eines Wechselspeichermedium (20) nach einem der Ansprüche 1 bis 8 in einem Computer (1), aufweisend mindestens eine Anschlussmöglichkeit (2) für das Wechselspeichermedium (20) und eine Bootkontrollvorrichtung (5), die dazu eingerichtet ist, die Authentizität eines an die mindestens eine Anschlussmöglichkeit (2) angeschlossenen Wechselspeichermediums (20) zu überprüfen und/oder die Nutzungsbefugnis eines Benutzers abzufragen und ein Ausführen des auf dem angeschlossenen Wechselspeichermedium (20) gespeicherten Betriebssystems (23) auf dem Computer (1) nur zuzulassen, wenn das angeschlossene Wechselspeichermedium (20) authentisch ist und/oder der Benutzer zur Nutzung des Betriebssystems (23) befugt ist, wobei der Computer (1) dazu eingerichtet ist, das auf dem angeschlossenen Wechselspeichermedium (20) befindliche Betriebssystem (23) auszuführen.

10. Verwendung nach Anspruch 9, wobei die Bootkontrollvorrichtung (5) mithilfe eines Programms realisiert wird und das Programm in einem nichtveränderbaren Speicher des Computers (1) abgelegt ist.

11. Verfahren zum Starten und Betreiben eines Computers (1) mit einem in einen ersten Speicherbereich (21) eines Wechselspeichermediums (20) enthaltenen Betriebssystem (23), mit den folgenden Schritten:
- Überprüfen der Authentizität des Wechselspeichermediums (20) und/oder
- Überprüfen der Nutzungsbefugnis eines Benutzers für das Ausführen des auf dem Wechselspeichermedium (20) enthaltenen Betriebssystems (23),
- Ausführen des auf dem Wechselspeichermedium (20) enthaltenen Betriebssystems (23) in einem ersten, normalen Betriebsmodus, in dem das in dem ersten Speicherbereich enthaltenes Betriebssystem (23) vor Veränderungen geschützt ist, falls das Wechselspeichermedium (20) authentisch ist und/oder der Benutzer zur Nutzung des Betriebssystems (23) befugt ist.

12. Verfahren nach Anspruch 11, bei dem die Authentizität des Wechselspeichermediums (20) anhand eines in dem ersten Speicherbereich (21) des Wechselspeichermedium (20) enthaltenen Zertifikats (22) überprüft wird.

13. Verfahren nach einem der Ansprüche 11 bis 12, bei dem benutzerspezifische Daten, die beim Betrieb des Betriebssystems (23) anfallen, in einem zweiten, in dem ersten, normalen Betriebsmodus beschreibbaren Speicherbereich (24) des Wechselspeichermediums (20) gespeichert werden.

14. Verfahren nach einem der Ansprüche 11 bis 13, bei dem Daten, die spezifisch für den Computer (1) sind und die beim Betrieb des Betriebssystems (23) benötigt werden, in einem beschreibbaren Speicherbereich (24) des Wechselspeichermediums (20) gespeichert werden.

15. Verfahren nach Anspruch 14, bei dem die Daten, die spezifisch für den Computer (1) sind, zusammen mit einer eindeutigen Kennung des Computer (1) gespeichert werden.
